Europäisches Patentamt

(19) European Patent Office

Office européen des brevets

(11) Veröffentlichungsnummer: **0 121 110**
A2

(12) **EUROPÄISCHE PATENTANMELDUNG**

(21) Anmeldenummer: 84102211.4

(22) Anmeldetag: 02.03.84

(51) Int. Cl.³: **G 01 N 31/08**
**G 01 N 1/00**

(30) Priorität: 07.03.83 US 472900

(43) Veröffentlichungstag der Anmeldung:
10.10.84 Patentblatt 84/41

(84) Benannte Vertragsstaaten:
DE FR GB

(71) Anmelder: International Business Machines
Corporation
Old Orchard Road
Armonk, N.Y. 10504(US)

(72) Erfinder: Banks, Thomas Michael
174-4 Maybury Circle
Waterbury Connecticut 06705(US)

(72) Erfinder: Ruckel, Raymond Robert
Indian Brook Road
Garrison New York 10524(US)

(72) Erfinder: Spencer, Samuel Franklin
302 Village Square
Danbury Connecticut 06801(US)

(72) Erfinder: Walker, John Quillian
87 Obsuce Road
Brookfield Center Connecticut 06805(US)

(74) Vertreter: Willich, Wolfgang, Dipl.-Ing.
Schönaicher Strasse 220
D-7030 Böblingen(DE)

(54) Verfahren zum Betrieb eines automatischen Probenzuführgerätes für Gaschromatographen und Gerät zur Durchführung des Verfahrens.

(57) Das Spülen des mit einer seitlichen Öffnung (10) versehenen Zylinders (12) und der Hohlnadel (24) erfolgt bei zurückgezogenem Kolben (22) mittels Zufuhr von Reinigungslösung in die seitliche Öffnung (10). Sodann wird der Kolben (22) vorgefahren und drückt die Reinigungslösung aus dem Zylinder (12) durch die Hohlnadel (24). Anschließend wird die hohlnadel (24) in ein Probenvorratsgefäß (30) getaucht und der Kolben (22) um einen definierten Hubweg zurückgefahren, so daß Probenflüssigkeit in bestimmbarer Menge in die Hohlnadel (24) und gegebenenfalls auch in den Zylinder (12) gezogen wird und zum Einfüllen in den Gaschromatographen unter der Wirkung des vorfahrenden Kolbens (22) zur Verfügung steht.

FIG. 3          FIG. 4

Verfahren zum Betrieb eines automatischen Probenzuführgerätes für Gaschromatographen und Gerät zur Durchführung des Verfahrens

Die Erfindung betrifft ein Verfahren zum Betrieb eines
automatischen Probenzuführgerätes für Gaschromatographen, das eine Spritze mit Zylinder, Kolben und Hohlnadel aufweist, wobei sich im Zylinder nahe der zurückgezogenen Endposition des Kolbens eine radial verlaufende seitliche Öffnung befindet, sowie ein Gerät zur
Durchführung des Verfahrens.

Es sind zwei grundsätzliche Arten derartiger Probenzuführgeräte bekannt, bei denen eine Spritze in Form eines Zylinders mit Kolben verwendet wird, mittels deren
die Flüssigkeitsprobe durch eine Hohlnadel in die Einfüllöffnung eines Gaschromatographen gelangt. Bei der
ersten Art dient der Kolben dazu, die Flüssigkeitsprobe
durch die Nadel hindurch in die Spritze zu ziehen und
sodann diese Probe durch die Nadel in die Einfüllöffnung des Gaschromatographen zu drücken. Anschließend
wird die Hohlnadel durchgespült, indem mittels des Kolbens eine entsprechende Lösung durch die Nadel hindurch
in die Spritze gezogen und wieder ausgespritzt wird.
Dabei bereitet es besondere Schwierigkeiten, eine einwandfreie Reinigung zu gewährleisten und jegliche Verschmutzung zu vermeiden. Denn es kann bei diesem Vorgang beispielsweise Luft in die Spritze gelangen, und
um dies zu verhindern, d.h. eine völlig luftblasenfreie
Probe zu erhalten und eine einwandfreie Spülung zu erzielen, sind im allgemeinen mehrere Kolbenhübe erforderlich. Wird die Probenzuführung im automatischen Betrieb durchgeführt, so ist hierzu häufig ein manueller
Eingriff notwendig, um die gefürchtete Verschmutzung
durch Lufteintritt zu vermeiden.

PO 982 033

Die zweite Art von Probenzuführgeräten weist einen Zylinder mit einer seitlichen, radial verlaufenden Öffnung nahe dem oberen Zylinderende auf. Zum Einführen der Probe in den Zylinder wird der Kolben in seine obere, d.h. zurückgezogene Lage gezogen und die Probe durch die seitliche Öffnung eingepumpt. Der Kolben drückt sodann die Flüssigkeit aus dem Zylinder hinaus in die Einfüllöffnung des Gaschromatographen. Das Spülen der Spritze erfolgt sodann im wesentlichen auf die gleiche Weise, indem Reinigungslösung durch die seitliche Öffnung eingeführt wird und unter geringem Druck durch die Spritze hindurch in einen entsprechenden Behälter gelangt. Bei diesem Verfahren ist das Problem der Verschmutzung durch Luftblasen vermieden, jedoch gelangen die Flüssigkeitsproben in direkten Kontakt mit dem Kolben und insbesondere auch mit dem Ringspalt zwischen Kolben und Zylinderwand. Weiterhin benötigt man bei dieser Ausführung beträchtliche Mengen an Probenflüssigkeit, da die Proben sowohl die Spritze als auch die Leitungen zur seitlichen Öffnung vollständig füllen müssen. Man benötigt beispielsweise für eine 10 µl-Spritze mindestens 10 µl Probenflüssigkeit. Verwendet man auch für das Spülen Probenflüssigkeit, so wird der Verbrauch noch gravierender.

Der Erfindung liegt die Aufgabe zugrunde, eine Verbesserung der bekannten Methoden zu schaffen, bei der auch ganz geringe Probenflüssigkeitsvolumina verarbeitet werden können und jegliche Verschmutzung vermieden ist. Diese Aufgabe ist erfindungsgemäß durch das im Patentanspruch 1 angegebene Verfahren gelöst worden. Zur Durchführung des erfindungsgemäßen Verfahrens wird somit ein Gerät mit dem Wirkungsprinzip der vorgenannten zweiten Art verwendet, jedoch so gestaltet, daß zwar das Spülen der Spritze gleichfalls durch Zufuhr

PO 982 033

von Reinigungslösung durch die seitliche Öffnung im Zylinder durchgeführt und die Nadel somit ausschließlich in Ausflußrichtung durchflossen wird, die Aufnahme der Probenflüssigkeit jedoch durch die Nadel erfolgt. Der besondere Vorteil des erfindungsgemäßen Verfahrens besteht dabei darin, daß auch eine sehr geringe Probenflüssigkeitsmenge aufgenommen werden kann, z.B. für eine 1 µl-Spritze eine Probenmenge von 0,1 µl, und daß wegen der in der Hohlnadel befindlichen Reserve an Reinigungsflüssigkeit diese eine Art Pufferschicht zwischen der Probenflüssigkeit und dem Kolben sowie dem Ringspalt zwischen Kolben und Zylinderwand bildet, wenn der Kolben zur Aufnahme von Probenflüssigkeit zurückgefahren wird.

Eine bevorzugte Ausführung eines Probenzuführgerätes für Gaschromatographen zur Durchführung des erfindungsgemäßen Verfahrens wird nachfolgend anhand der Zeichnungen beschrieben. Es zeigen:

Fign. 1    in schematischer Darstellung die aufeinander-
bis   4    folgenden Schritte beim Betrieb eines Probenzuführgerätes,

Fig. 5    eine Seitenansicht eines Probenzuführgerätes
          und

Fig. 6    eine Draufsicht in der Ebene 6-6 der Fig. 5
          zur Darstellung der Antriebsanordnung für die
          Probenträger am Beispiel eines Einzelsegments.

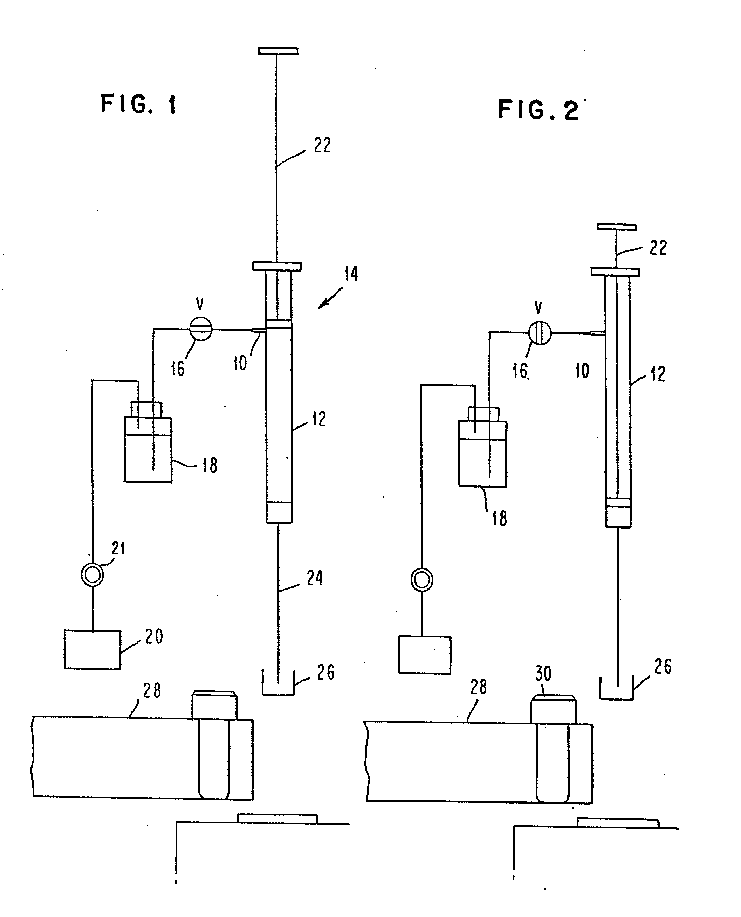

Gemäß Fig. 1 verbindet eine seitliche Öffnung 10 des Zylinders 12 einer Spritze 14 das Zylinderinnere über ein Absperrventil 16 mit einem Lösungsvorratsbehälter 18. Der Lösungsvorratsbehälter 18 ist außerdem über

PO 982 033

einen Druckregler 21 mit einer Druckquelle 20 verbunden. Während des Spülens der Spritze 14 mit Reinigungsflüssigkeit ist, wie Fig. 1 zeigt, das Absperrventil 16 geöffnet, so daß die Lösung vom Lösungsvorratsbehälter 18 durch die seitliche Öffnung 10 in den Zylinder 12 gelangt. Da sich der Kolben mit Kolbenstange 22 gemäß Fig. 1 oberhalb der seitlichen Öffnung 10 befindet, gelangt die Reinigungslösung unter Druck von der Druckquelle 20 durch die Hohlnadel 24 des Zylinders 12 hindurch in einen Lösungsauffangbehälter 26.

Das Spülen der Hohlnadel 24 in dieser Flußrichtung wird solange aufrechterhalten, bis die Spritze 14 gereinigt ist. Sodann wird gemäß Fig. 2 das Absperrventil 16 geschlossen und der Kolben mit Kolbenstange 22 in seine vordere Stellung verstellt, wobei der Zylinder 12 vollständig von Lösung entleert wird, so daß sich nur noch in der Hohlnadel 24 Reinigungslösung befindet.

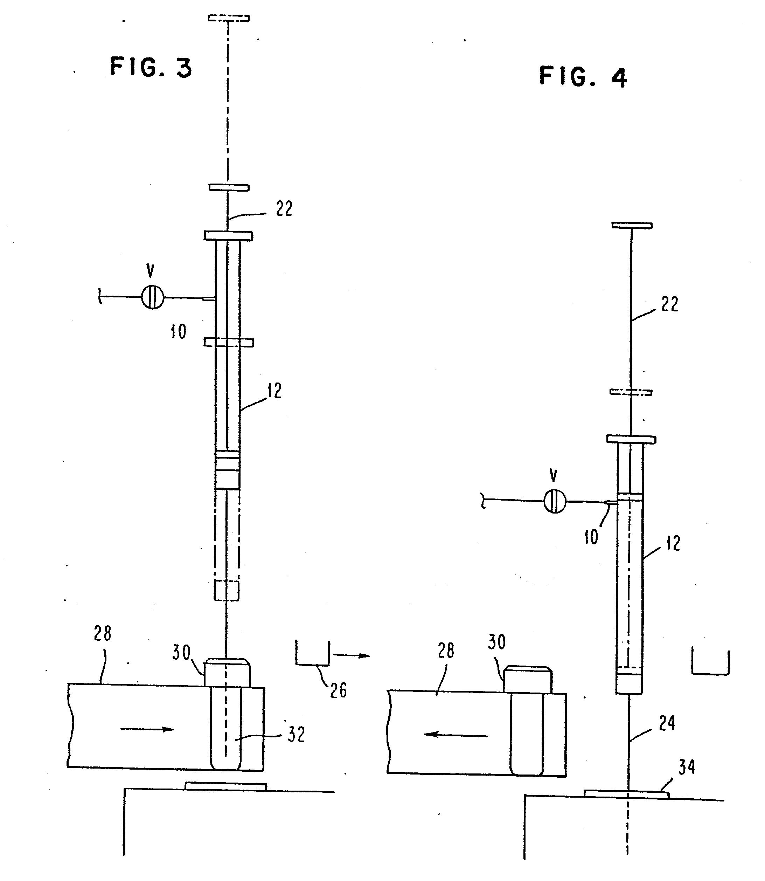

Nun wird, wie in Fig. 3 dargestellt, der Lösungsauffangbehälter 26 seitlich wegbewegt und ein Probenträger 28 so unter die Hohlnadel 24 gedreht, daß ein Probenvorratsgefäß 30 mit der Nadel ausgerichtet ist. Die Spritze 14 wird nun nach unten verstellt, bis die Nadel 24 in die Probenflüssigkeit 32 eintaucht. Durch anschließende Aufwärtsbewegung des Kolbens 22 wird Probenflüssigkeit in die Hohlnadel 24 und den Zylinder 12 gesaugt, und zwar in einer Menge, wie sie durch den Hub des Kolbens 22 vorbestimmbar ist. Im gegebenen Fall kann es sogar vorkommen, daß hierbei nur die Hohlnadel 24 mit Probenflüssigkeit gefüllt wird. Die zuvor aus der Nadel nach oben gezogene Reinigungslösung befindet sich zwischen der Kolbenfläche und der nachfolgend angesaugten Probenflüssigkeit.

PO 982 033

Gemäß der Darstellung nach Fig. 4 wird nun der Probenträger 28 mit dem Probenvorratsgefäß 30 wieder horizontal wegbewegt, und die Spritze 14 wird erneut nach unten verstellt, um die Hohlnadel 24 in die Einfüllöffnung 34 des Gaschromatographen zu führen. Bei weiterhin geschlossenem Absperrventil 16 fährt nun der Kolben 22 wieder nach unten und entleert die in der Nadel 24 bzw. zusätzlich im Zylinder 12 befindliche Probenflüssigkeit in den Gaschromatographen. Nun wird die Spritze 14 wieder in ihre in Fig. 1 dargestellte Ausgangslage gefahren, und der Zyklus der beschriebenen Verfahrensschritte beginnt von neuem, indem der Lösungsauffangbehälter 26 wieder unter die Hohlnadel 24 gefahren wird.

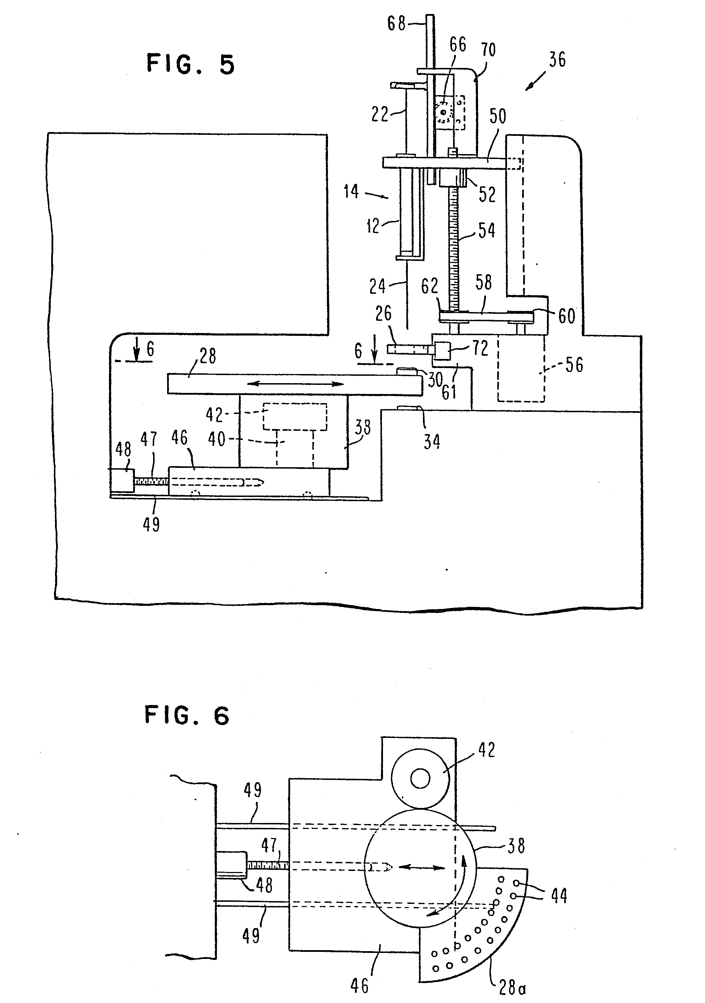

Die Fign. 5 und 6 zeigen, wie der Probenkopf 36 auf dem Gaschromatographen angeordnet ist, wobei die Hohlnadel 24 oberhalb der Einfüllöffnung 34 und axial zu dieser ausgerichtet angeordnet ist. Der Probenträger 28 ist relativ zum Probenkopf 36 so angeordnet, daß er unter die Spritze 14 eingefahren und wieder ausgefahren werden kann. Der Probenträger 28 ist als Vier-Segment-Karussell ausgebildet, wobei jedes Segment an einer zentralen Nabe 38 befestigt ist, die mittels eines Schrittmotors 40 über eine Reibrolle 42 drehbar ist, um die unterschiedlichen Aufnahmeöffnungen 44 des Probenträgers 28a unter die Nadel zu positionieren. Die Nabe 38 und der Probenträger 28 sind auf einem Wagen 46 drehbar gelagert, auf dem der Schrittmotor 40 befestigt ist. Der Wagen 46 kann mittels einer Gewindewelle 47 von einem Schrittmotor 48 längs Führungsschienen 49 verstellt werden, um die Aufnahmeöffnungen 44 in die und aus der Probenentnahmeposition zu verstellen. Die Schrittmotoren 40 und 48 dienen somit dazu, jeweils eine der Aufnahmeöffnungen 44 unter die Nadel zu positionieren, und der Probenträger 28 kann außerdem von

PO 982 033

der Nadel 24 hinweg ausgefahren werden, damit keine Kollision mit dem Spülvorgang der Spritze 14 und dem Einfüllen der Probenflüssigkeit in den Gaschromatographen auftreten kann.

Der Zylinder 12 der Spritze 14 ist auf einem Träger 50 montiert, der eine Mutter 52 auf einer Gewindewelle 54 aufweist, die ihrerseits von einem Schrittmotor 56 über einen Riemen 58 und Riemenscheiben 60 und 62 angetrieben wird. Dieser Antrieb bewirkt, daß der Zylinder 12 relativ zum Rahmen 61 des Probenkopfes 36 vertikal verstellt werden kann.

Der Antrieb für die Kolbenstange mit Kolben 22 ist auf dem Träger 50 angeordnet. Ein Schrittmotor 66 ist an einem Träger 70 befestigt, der seinerseits auf dem Träger 50 befestigt ist. Der Schrittmotor 66 treibt eine Zahnstange 68, die am Kolben 22 bzw. der Kolbenstange befestigt ist und bezüglich des Trägers 50 vertikal beweglich ist, so daß der Kolben 22 mit der Kolbenstange unabhängig vom Zylinder 12 vertikal bewegt werden kann. Der Lösungsauffangbehälter 26 ist auf dem Rahmen 61 schwenkbar gelagert, so daß er, solange er nicht benötigt wird, mittels eines magnetbetätigten Armes 72 ausgeschwenkt werden kann.

PO 982 033

P A T E N T A N S P R Ü C H E

1. Verfahren zum Betrieb eines automatischen Probenzuführgerätes für Gaschromatographen, das eine
Spritze mit Zylinder, Kolben und Hohlnadel aufweist, wobei sich im Zylinder nahe der zurückgezogenen Endposition des Kolbens eine radial verlaufende, seitliche Öffnung befindet, welche in
der Endposition des Kolbens eine Durchflußverbindung zum Zylinderraum herstellt, und das eine
Quelle zur Zufuhr von Reinigungslösung aufweist,
dadurch gekennzeichnet, daß

a) bei in seiner zurückgezogenen Endposition
befindlichem Kolben Reinigungslösung aus
einem Lösungsvorratsbehälter durch die
Öffnung in den Zylinder und durch die Hohlnadel gepumpt wird,

b) zum Ausschieben der eingepumpten Reinigungslösung durch die Hohlnadel in einen Lösungsauffangbehälter der Kolben in seine vordere
Endposition bewegt wird,

c) die Hohlnadel in ein Gefäß mit Probenflüssigkeit eingetaucht und der Kolben um einen
vorbestimmten Hubweg zurückgezogen wird, so
daß Probenflüssigkeit in einer dem Hubweg
entsprechenden Menge in die Hohlnadel und
gegebenenfalls in den Zylinder gezogen wird,
und

d) die Hohlnadel mit der Einspritzöffnung des
Gaschromatographen verbunden und mittels
vollständigen Vorfahrens des Kolbens die

PO 982 033

- 8 -

vorbestimmte Probenmenge dem Gaschromatographen zugeführt wird.

2. Probenzuführgerät zur Durchführung des Verfahrens nach Anspruch 1,
dadurch gekennzeichnet,
daß zur Zufuhr der Reinigungslösung aus dem Lösungsvorratsbehälter (18) durch die seitliche Öffnung (10) in den Zylinder (12) eine Druckquelle (20) und ein Absperrventil (16) angeordnet sind,
daß Mittel (28, 38, 40, 42, 46, 47, 48) vorgesehen sind zur wechselweisen axialen Ausrichtung der Hohlnadel (24) mit dem Lösungsauffangbehälter (26) und mit dem Probenvorratsgefäß (30) sowie mit dem Gaschromatographen, und Mittel (50-62) zur Höhenverstellung der Spritze (14) nach der jeweiligen axialen Ausrichtung.

PO 982 033

FIG. 1

FIG. 2

A-PO 982 033

FIG. 3

FIG. 4